**Europäisches Patentamt**

**European Patent Office**

**Office européen des brevets**

(11) Veröffentlichungsnummer: **0 274 633 B1**

(12) **EUROPÄISCHE PATENTSCHRIFT**

(45) Veröffentlichungstag der Patentschrift: **21.08.91**

(21) Anmeldenummer: **87117557.6**

(22) Anmeldetag: **27.11.87**

(51) Int. Cl.⁵: **C02F 3/10**

(54) **Füllmaterial für Tropfkörper zur Behandlung von Flüssigkeiten sowie Verfahren zur Herstellung und Montage desselben.**

(30) Priorität: **09.12.86 DE 3641960**

(43) Veröffentlichungstag der Anmeldung:
**20.07.88 Patentblatt 88/29**

(45) Bekanntmachung des Hinweises auf die
Patenterteilung:
**21.08.91 Patentblatt 91/34**

(84) Benannte Vertragsstaaten:
**AT BE CH DE ES FR GB IT LI LU NL SE**

(56) Entgegenhaltungen:
**EP-A- 0 056 083**
**EP-A- 0 145 853**
**DE-A- 2 532 344**

**CHEMIE-INGENIEUR TECHNIK, Band 46, Nr. 7,
1974, Seite 293, Verlag Chemie, Weinheim,
DE; J. LÜKE et al.: "Ein neuentwickeltes
Tropfkörperelement aus Kunststoff-Folien
zur biologischen Abwasserreinigung"**

(73) Patentinhaber: **Norddeutsche Seekabelwerke
Aktiengesellschaft
Kabelstrasse
W-2890 Nordenham(DE)**

(72) Erfinder: **Basse, Hartwig
Wartfelder Strasse 6p
W-2890 Nordenham(DE)**

(74) Vertreter: **Möller, Friedrich, Dipl.-Ing. et al
Meissner, Bolte & Partner Patentanwälte Hollerallee 73
W-2800 Bremen 1(DE)**

EP 0 274 633 B1

## Beschreibung

Die Erfindung betrifft ein Füllmaterial für Tropfkörper zur Behandlung von Flüssigkeiten, insbesondere zur biologischen Abwasserreinigung, gemäß dem Oberbegriff des Anspruchs 1. Des weiteren betrifft die Erfindung ein Verfahren zur Herstellung von Füllmaterial gemäß dem Oberbegriff des Anspruchs 15 und ein Verfahren zum Aufbringen von zur Behandlung von Flüssigkeit dienendem Füllmaterial auf eine Trageinrichtung gemäß dem Oberbegriff des Anspruchs 21.

Die hier angesprochenen Füllkörper werden überwiegend zur biologischen Behandlung in der Abwassertechnik eingesetzt. Sie dienen dabei zur Aufnahme der für die biologische Behandlung erforderlichen Bakterien, nämlich eines sogenannten biologischen Rasens. Dabei hängt die Leistungsfähigkeit eines mit Füllmaterial bestückten Tropfkörpers von der spezifischen Bewuchsfläche, dem Halt der Bakterien an derselben und der allseitigen, ungehinderten Benetzbarkeit des biologischen Rasens auf dem Füllmaterial durch die zu behandelnde Flüssigkeit ab.

Ein gattungsgemäßes Füllmaterial ist bekannt aus der EP-A-0 145 853. Dabei werden die einzelnen Streifen durch ein Profil auf einer Tragstange festgeklemmt. Die Streifen behalten dadurch ihren losen Charakter bei. Aus einem solchen Füllmaterial lassen sich Tropfkörper nur sehr aufwendig herstellen, weil die Streifen einzeln exakt nebeneinanderliegend auf die Tragstangen aufgehängt werden müssen, um danach vom Profil einzeln auf der Tragstange festgeklemmt werden zu können. Abgesehen von dem damit verbundenen großen Herstellungsaufwand des Füllmaterials ist nur eine unzureichende Sicherung der Streifen auf der Tragstange gewährleistet.

Hiervon ausgehend liegt der Erfindung die Aufgabe zugrunde, ein wirksames, aber gleichwohl einfach herstellbares und montierbares Füllmaterial für einen Tropfkörper sowie ein entsprechendes Herstellungs- und Montageverfahren zu schaffen.

Zur Lösung dieser Aufgabe weist das erfindungsgemäße Füllmaterial die kennzeichnenden Merkmale des Anspruchs 1 auf. Infolge der Verbindung einer Vielzahl von Streifen durch eine quergerichtete, folien- oder netzartige Haltebahn ist eine industrielle Vormontage größerer Einheiten möglich. Dadurch wird die Tropfkörpermontage vor Ort erleichtert, weil für einen Tropfkörper aus dem erfindungsgemäßen Füllmaterial weniger Einzelteile erforderlich sind als bei dem Tropfkörper aus dem Füllmaterial nach der EP-A-0 145 853.

Ein besonders effektiver Tropfkörper ergibt sich dann, wenn das Füllmaterial aus mehreren Lagen streifenförmiger Bahnen besteht. Es läßt sich so nämlich eine größere Anzahl von Streifen einer gemeinsamen Haltebahn zuordnen. Zweckmäßigerweise sind die Streifen benachbarter Lagen um etwa eine halbe Streifenbreite zueinander versetzt, derart, daß die einzelnen Streifen auf "Lücke" zueinander sich befinden. Hierdurch wird eine besonders gleichmäßige Verteilung der Streifen am Füllmaterial und damit eine optimale Benetzung derselben durch die zu behandelnde Flüssigkeit erreicht.

Ein besonders vorteilhaftes Füllmaterial entsteht durch die Anordnung von Durchbrüchen in der Haltebahn oder die Herstellung derselben aus einem Netz. Dadurch hindert die oben auf die Tragbalken der Trageinrichtung aufgelegte Haltebahn nicht an einer optimalen Berieselung des Füllmaterials mit der zu behandelnden Flüssigkeit.

Bei einem vorteilhaften Ausführungsbeispiel des erfindungsgemäßen Füllmaterials ist die Haltebahn quergerichtet über die Streifen gelegt und mit denselben verschweißt. Hierdurch wird eine besonders einfache Herstellungsmöglichkeit des Füllmaterials geschaffen, da bei einem U-förmigen Herumfalten der Haltebahn um den Tragbalken die gegenüberliegenden Enden der durchgehenden Streifen in zwei parallel zueinander verlaufenden, aufrechten Abtropfebenen zu liegen kommen. Dadurch erhält das Füllmaterial die doppelte wirksame Anzahl von Streifen.

Die Streifen für das erfindungsgemäße Füllmaterial können - je nach Einsatzzweck - unterschiedlich gestaltet sein. In einfachster Form können gewebte, aber auch multifile Fäden oder Folien zum Einsatz kommen. Zusätzlich können die Oberflächen der Folien angerauht bzw. strukturiert sein, und zwar insbesondere die freien Ränder. Letztere können in besonders einfacher Weise durch Anrekken einen wellenförmigen Verlauf erhalten zur Bereitstellung einer ausreichend großen Benetzungsfläche. Alternativ ist es auch denkbar, Streifen mit einem wendelförmigen Verlauf vorzusehen. Dabei hat sich überraschenderweise gezeigt, daß diese zwangsläufig einen wendelförmigen Verlauf erhalten, wenn eine Folie in Streifen von weniger als 20 mm Breite geschnitten wird. Dieser Effekt tritt besonders deutlich auf, wenn als Ausgangsmaterial für die Streifen eine sogenannte Raschelfolie aus kalandriertem Kunststoffgewebe verwendet wird. Gegebenenfalls können die Streifen auch aus einem geflochtenen oder extrudiertem Netz bzw. einem Netzschlauch hergestellt werden. Als Kunststoff für die vorstehend genannten Streifenarten kommt thermoplastischer Kunststoff, nämlich insbesondere Polypropylen, in Betracht.

Nach einem weiteren Vorschlag der Erfindung erfolgt die Verschweißung der Haltebahnen mit den Streifen durch mehrere, vorzugsweise zwei mit Abstand voneinander parallel zueinander verlaufenden Schweißnähten, und zwar derart, daß an gegenüberliegenden Rändern der Haltebahn unverschweißte Randstreifen übrigbleiben. Diese stehen bei hängend über den Tragbalken der Trageinrichtung angeordnetem Füllmaterial seitlich unter einem spitzen Winkel von den aufrechten Abtropfebenen ab zur Bildung einer Abtropfrinne, die eine optimale Benetzung der mit biologischem Bewuchs behafteten Streifen fördert.

Nach einem weiteren Vorschlag der Erfindung sind zwei Gruppen aus mehreren übereinanderliegenden Lagen angrenzender Streifen an den gegenüberliegenden Enden der Haltebahn befestigt, und zwar vorzugsweise durch Verschweißen. In diesem Falle ist das Füllmaterial im Bereich der Haltebahn nur einlagig, wodurch es sich besonders einfach U-förmig umlegen läßt zum Aufhängen auf der Trageinrichtung.

Das Verfahren zum Herstellen insbesondere des erfindungsgemäßen Füllmaterials weist die kennzeichnenden Merkmale des Anspruchs 15 auf. Durch das Herstellen der Streifen infolge eines Zerschneidens mindestens einer von einem endlosen Band abgewickelten Folie lassen sich diese mit wenig Arbeitsaufwand zur Weiterverarbeitung in der richtigen Lage konfektionieren, und zwar kontinuierlich. Eine weitere Besonderheit dieses Verfahrens liegt darin, daß eine größere Anzahl des erfindungsgemäßen Füllmaterials hintereinanderliegend auf einer Vorratsrolle aufgewickelt wird. Das Aufhängen der so hergestellten Füllmaterialien auf die Trageinrichtung des Tropfkörpers läßt sich dadurch erheblich gegenüber bekannten Füllkörpern vergleichbarer Art vereinfachen.

Bei einer Weiterentwicklung des erfindungsgemäßen Verfahrens wird vorgesehen, nach dem Zerschneiden der Folien zu einzelnen Streifen, aber vor dem Aufbringen des Haltebandes, die Streifen durch Vorbeibewegen an entsprechenden Umlenktrommeln zu strukturieren und gegebenenfalls die Ränder der Streifen anzudehnen. Letztes läßt sich alternativ auch durch einen entsprechenden Schnitt der Folien erreichen. Diese Manipulationen an den Streifen können kontinuierlich ohne zusätzliche Arbeitsgänge durchgeführt werden.

Des weiteren wird in Weiterbildung des erfindungsgemäßen Verfahrens vorgeschlagen, gleichzeitig mit dem Aufbringen der Haltebahn das fertiggestellte Füllmaterial von den Streifen des nachfolgenden Füllmaterials abzugrenzen, und zwar durch Signieren bzw. Prägen. Dadurch läßt sich einerseits eine größere Anzahl von Füllmaterial ununterbrochen auf einer einzigen Vorratsrolle aufwickeln, während andererseits die Voraussetzungen für ein einfaches Trennen aneinander angrenzender Füllmaterialien bei der Montage ermöglicht wird.

Ein Verfahren zur Montage insbesondere des erfindungsgemäßen Füllmaterials weist die kennzeichnenden Merkmale des Anspruchs 21 auf. Dieses zeichnet sich besonders deswegen durch eine verblüffend einfache Aufbringung des Füllmaterials auf die Trageinrichtung aus, weil eine große Anzahl vorkonfektionierter, nämlich durch eine gemeinsame Haltebahn miteinander verbundener Streifen lediglich von der Vorratsrolle abgezogen zu werden braucht, um so nach und nach die einzelnen Tragbalken der Trageinrichtung mit Füllmaterial zu behängen. Ein Hindurchfädeln der beiden Gruppen aus jeweils einer Mehrzahl von Streifen zwischen den Freiräumen benachbarter Tragbalken wird hier vereinfacht durch eine gabelförmig ausgebildete Einfädeleinrichtung, mit der die nach dem Abziehen von der Vorratsrolle plan auf der Trageinrichtung aufliegenden Streifen des Füllmaterials durch die Spalträume an beiden Seiten des jeweils zu beschickenden Tragbalkens hindurchgestoßen werden. Lediglich vor dem vollständigen Hindurchstoßen der Streifen durch die Spalträume ist der Signierstreifen zwischen dem aufzubringenden und dem nachfolgenden Füllmaterial durch ein entsprechendes Schneidorgan, beispielsweise eine Schere oder ein Messer, zu durchtrennen. Nach dem Einfädeln der Streifen erfolgt eine dauerhafte, formschlüssige Fixierung des so über einen Tragbalken gelegten Füllmaterials durch eine entsprechende Anzahl von Befestigungsorganen, beispielsweise Nägeln, Heftklammern, Schrauben oder dgl. Einem eventuellen Verrutschen der Füllkörper auf der Trageinrichtung wird hierdurch in einfacher, aber wirkungsvoller Weise entgegengewirkt.

Zwei Ausführungsbeispiele des erfindungsgemäßen Füllmaterials sowie eine Vorrichtung zur Herstellung und zur Montage desselben werden nachfolgend anhand der Zeichnungen näher erläutert. In dieser zeigen:

| | |
|---|---|
| Fig. 1 | eine Seitenansicht einer ersten Ausführungsform des erfindungsgemäßen Füllmaterials im aufgehängten Zustand, |
| Fig. 2 | eine Draufsicht auf das Füllmaterial gemäß der Fig. 1, |
| Fig. 3 | eine Seitenansicht einer zweiten Ausführungsform des erfindungsgemäßen Füllmaterials im Einbauzustand, |
| Fig. 4 | eine Draufsicht auf das Füllmaterial gemäß der Fig. 3, |
| Fig. 5 | einen vergrößert dargestellten Abschnitt eines Streifens in einer Seitenansicht, |
| Fig. 6 | einen vergrößert dargestellten Querschnitt durch mehrere Streifen einer Gruppe, |
| Fig. 7 | eine vergrößert dargestellte flächige Ansicht eines Abschnitts aus einem einzelnen Streifen, |
| Fig. 8 | eine Seitenansicht einer Vorrichtung zur Herstellung des Füllmaterials ge- |

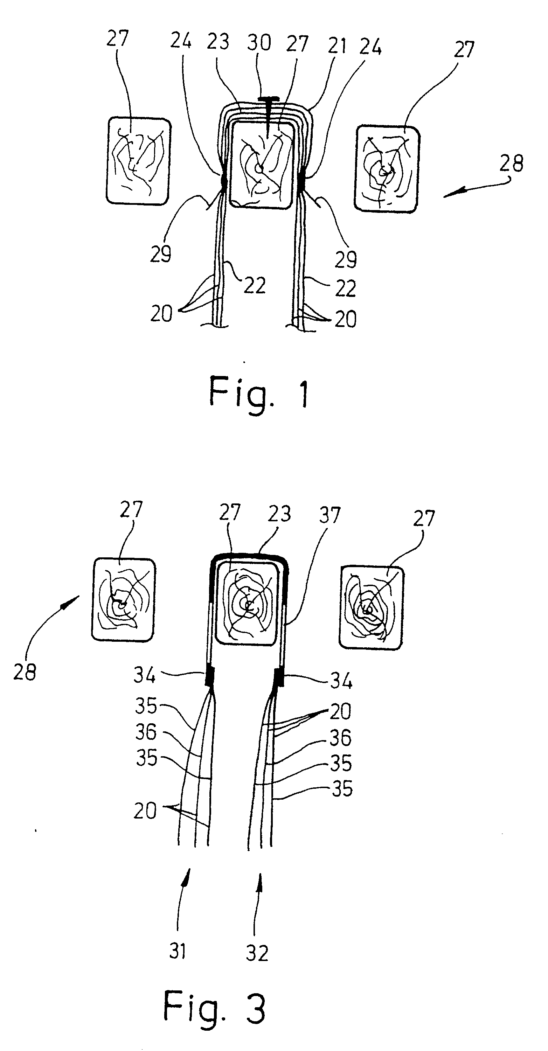

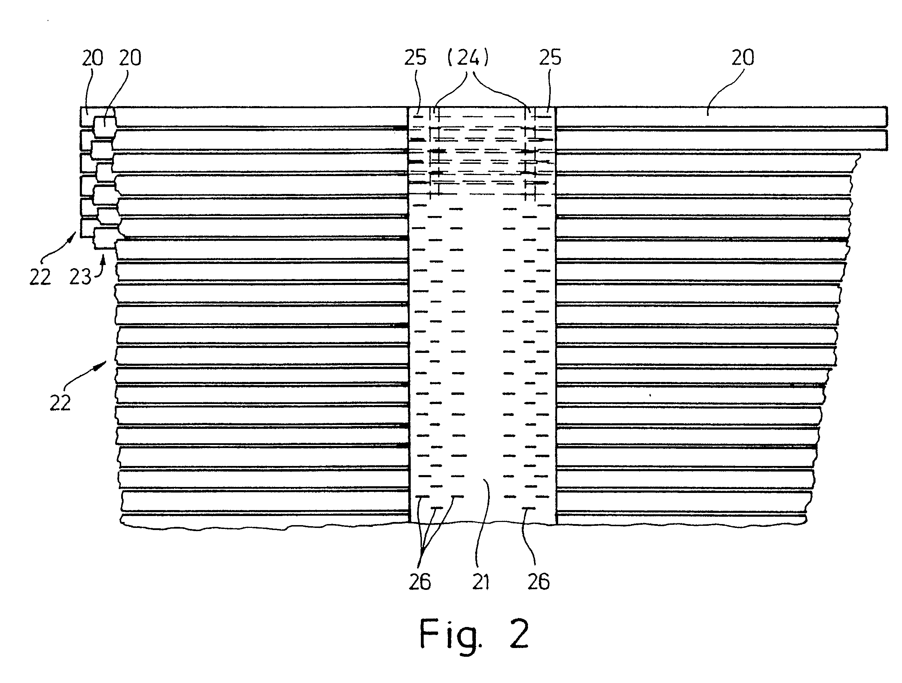

mäß den ersten Ausführungsbeispielen der Fig. 1 und 2,

Fig. 9 eine schematisch dargestellte Draufsicht auf die Vorrichtung gemäß der Fig. 8, und

Fig. 10 eine Seitenansicht einer Montageeinrichtung für das Füllmaterial beider Ausführungsbeispiele.

Die Fig. 1 und 2 zeigen eine Ausführungsform des erfindungsgemäßen Füllmaterials, bei dem eine Vielzahl von länglichen Streifen 20 durch eine mittige, quer verlaufende Haltebahn 21 miteinander verbunden sind. Die einzelnen Streifen 20 des Füllmaterials sind hier in drei übereinanderliegenden Lagen 22 bzw. 23 angeordnet. Wie die Fig. 2 zeigt, verfügen die beiden äußeren Lagen 22 über eine gleiche Anzahl von Streifen 20. Auch die Anordnung der in den äußeren Lagen 22 sich befindenden Streifen 20 ist etwa gleich. Hingegen weist die mittlere Lage 23 einen Streifen 20 weniger auf. Dadurch lassen sich die Streifen 20 der mittleren Lage 23 versetzt zu denjenigen der beiden äußeren Lagen 22 anordnen, derart, daß die Streifen 20 der mittleren Lage 23 mittig zwischen zwei Streifen 20 der äußeren Lagen 22 liegen, also auf "Lücke". Die Länge der Streifen 20 ist etwa in jeder Lage 22 bzw. 23 gleich.

Der Fig. 2 ist weiter zu entnehmen, daß die Streifen 20 mit etwa einem gleichen Bereich links und rechts gegenüber der Haltebahn 21 vorstehen, wobei jeder Streifen unter der Haltebahn 21 ununterbrochen weiterläuft und ein einziger Streifen 20 zur Bildung beider Teile des Füllmaterials dient, nämlich des links bzw. rechts von der Haltebahn 21 liegenden Füllmaterials.

Verbunden sind die Streifen 20 im vorliegenden Fall durch zwei parallele Schweißnähte 24 mit der Haltebahn 21. Die Schweißnähte 24 verlaufen mit Abstand parallel zu den Seitenrändern der Haltebahn 21 zur Bildung gegenüberliegender, freier Randabschnitte 25. Auch zwischen den Schweißnähten 24 verlaufen die Streifen 20 ohne eine Verbindung untereinander bzw. zur Haltebahn 21.

Die Haltebahn 21 verfügt im vorliegenden Ausführungsbeispiel über eine Vielzahl durchgehender Einschnitte 26, die in der Fig. 2 durch längliche Striche angedeutet sind. Alternativ können anstelle der Einschnitte 26 in der Haltebahn 21 auch Löcher oder andere Durchbrechungen angeordnet sein. Es ist auch denkbar, die Haltebahn 21 als Netz auszubilden.

Die Fig. 1 zeigt mehrere Tragbalken 27 einer Trageinrichtung 28, wobei auf einen der Tragbalken 27 das erfindungsgemäße Füllmaterial aufgehängt ist. Wie aus dieser Figur ersichtlich wird, ist das Füllmaterial U-förmig über den Tragbalken 27 herübergelegt, wobei ein Teil der Haltebahn 21 die obere, horizontale Fläche des Tragbalkens 27 überdeckt und seitliche Randbereiche der Haltebahn 21 den größten Teil der gegenüberliegenden, aufrechten Flächen des Tragbalkens 27 überdecken. Die links und rechts gegenüber der Haltebahn 21 vorstehenden Abschnitte der Streifen 20 hängen dadurch in parallelen Ebenen auf beiden Seiten des Tragbalkens 27 herab.

Die Fig. 1 läßt auch erkennen, daß bei aufgehängtem Füllmaterial die gegenüberliegenden Randabschnitte 25 der Haltebahn 21 mit ihren freien Enden unter einem spitzen Winkel von der Ebene der Streifen 20 abstehen. Auf diese Weise bilden die gegenüberliegenden Randabschnitte 25 der Haltebahn 21 Abtropfenden 29 für die zu behandelnde Flüssigkeit, welche von der Oberseite der Trageinrichtung 28 aus auf das Füllmaterial gesprüht wird. Die Abtropfenden 29 tragen dadurch zur optimalen Benetzung der Streifen 20 mit der zu behandelnden Flüssigkeit bei.

Des weiteren wird die Benetzung der Streifen 20 mit der zu behandelnden Flüssigkeit durch die in der Haltebahn 21 angeordneten Einschnitte 26 verbessert, indem die auf den horizontalen Abschnitt der Haltebahn 21 auftreffende Flüssigkeit nicht vollständig zur Seite über die Abtropfenden 29 abzufließen braucht; vielmehr ein Teil der Flüssigkeit von der Oberseite der Haltebahn 21 aus durch diese hindurch auf die Streifen 20 gelangen kann.

Der Fig. 1 kann auch entnommen werden, daß die Schweißnähte 24 die drei Lagen 22 und 23 der Streifen 20 untereinander und mit der Haltebahn 21 verbinden.

Schließlich ist in der Fig. 1 noch eine formschlüssige Sicherung des Füllmaterials auf dem Tragbalken 27 dargestellt. Diese besteht im vorliegenden Ausführungsbeispiel aus einem oder mehreren Nägeln 30, die mit Abstand voneinander von oben durch die Haltebahn 21 und die Streifen der drei darunterliegenden Lagen 22 bzw. 23 hindurch in den Tragbalken 24 getrieben sind.

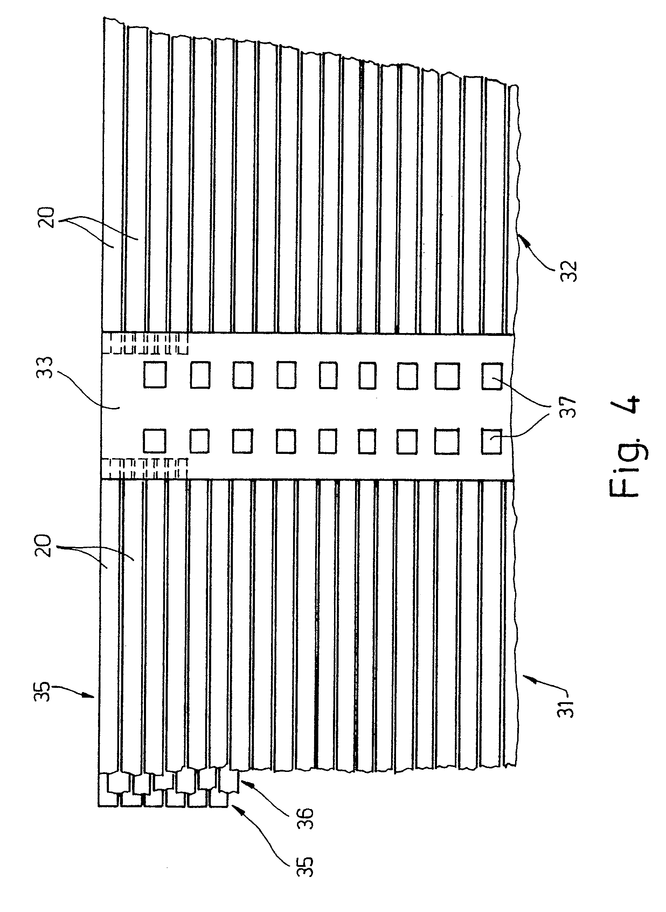

Die Fig. 3 und 4 zeigen ein zweites Ausführungsbeispiel des erfindungsgemäßen Füllmaterials. Hier sind zwei separate Gruppen 31 und 32 aus einer Vielzahl von Streifen 20 mit einer Haltebahn 33 verbunden. Jede Gruppe 31 bzw. 32 besteht auch hier aus drei Lagen 35 bzw. 36, nämlich zwei äußeren Lagen 35 und einer mittleren Lage 36. Die Relativanordnung der Streifen 20 in den einzelnen Lagen 35 und 36 kann analog zu dem ersten Ausführungsbeispiel getroffen sein.

Die Befestigung der beiden Gruppen 31 und 32 aus Streifen 20 an der Haltebahn 33 erfolgt derart, daß die oberen Enden jeder Gruppe 31 bzw. 32 mit den beiden Längsrändern 34 der Haltebahn 33 verschweißt sind, und zwar mit den in aufgehängtem Zustand des Füllmaterials einander gegenüberliegenden (Innen-) Flächen der Haltebahn 33.

Es ist auch denkbar, daß jeweils eine Lage 35 außenliegend an den Längsändern 34 der Haltebahn 33 festgeschweißt ist, während die übrigen Lagen 35 bzw. 36 - wie in Fig. 3 dargestellt - von innen her an die Haltebahn 33 geschweißt sind.

Im vorliegenden Ausführungsbeispiel weist die Haltebahn 33 mehrere gleichmäßig auf die Fläche derselben verteilte, rechteckförmige Durchbrüche 37 auf. Wie die Fig. 3 zeigt, befinden sich die Durchbrüche 37 beim montierten Füllmaterial in etwa auf gleicher Höhe einander gegenüberliegend in den senkrechten Abschnitten der Haltebahn 33. Die Durchbrüche 37 sorgen auch bei diesem Ausführungsbeispiel des Füllmaterials dafür, daß die von oben herangeführte Flüssigkeit auf beide Seiten der Streifen 20 beider Gruppen 31 bzw. 32 gelangen kann zur gleichmäßigen Benetzung derselben.

Die Haltebahnen 21 bzw. 33 sind bei dem Füllmaterial beider Ausführungsbeispiele aus einer UV-beständigen Kunststoff-Folie, vorzugsweise einer Polypropylen- bzw. einer Polyäthylenfolie, hergestellt. Alternativ kann die Haltebahn 21 bzw. 33 auch aus einem Netz gleichen Materials hergestellt sein.

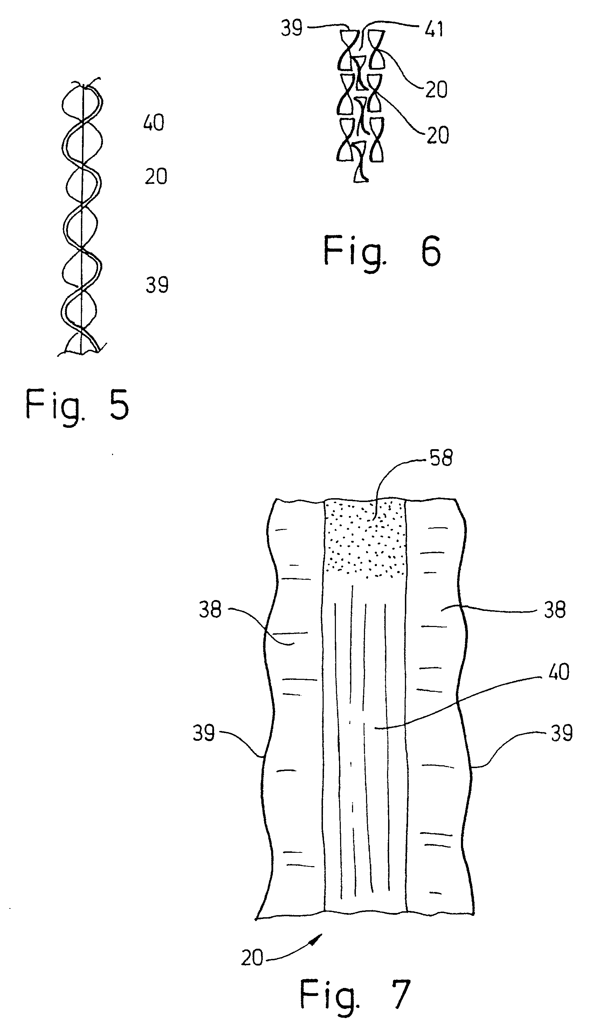

Für das Füllmaterial beider vorstehend beschriebener Ausführungsformen können Streifen 20 verwendet werden, wie sie in den Fig. 5 bis 7 dargestellt sind. Hierbei handelt es sich um Streifen 20 aus einer Folie, vorzugsweise einer "Raschelfolie" aus Polypropylen bzw. Polyäthylen. Zur Erhöhung der spezifischen Oberfläche und zur Schaffung optimaler Hafteigenschaften des biologischen Rasens auf den Streifen 20 sind diese im gezeigten Ausführungsbeispiel in besonderer Weise behandelt. Zum einen sind die einander gegenüberliegenden Randbereiche 38 der Streifen 20 durch Anrecken oder dgl. plastisch verformt, und zwar derart, daß die aufrechten Ränder 39 der Streifen 20 einen schlangenförmigen Verlauf aufweisen. Dieser kann den in der Fig. 5 dargestellten sinusförmigen Verlauf aufweisen. Ebensogut können die Ränder 39 aber auch unregelmäßige Form zeigen.

Zur Mitte des Streifens 20 nehmen die Aufwölbungen ab, nämlich derart, daß die Streifen 20 einen mittleren neutralen Bereich 40 aufweisen. In diesem verfügen die Streifen 20 über einen glatten Verlauf. Dieser unverformte neutrale Bereich 40 der Streifen 20 dient zur Aufnahme des Eigengewichts der benetzten Streifen 20, wobei keine nennenswerte Dehnung auftritt, die zur Glättung der gewölbten Ränder 39 aufgrund einer Zugbelastung führen könnte. Es ist aber auch möglich, die Oberfläche des neutralen Bereichs 40 auf der Vorder- und/oder Rückseite mit einer Strukturierung 58 zu versehen, wie andeutungsweise in der Fig. 7 dargestellt.

Überraschenderweise hat sich gezeigt, daß die Herstellung der gezeigten Streifen 20 besonders einfach möglich ist, wenn diese eine Breite von weniger als 20 mm aufweisen. Dann verdrillen sich die Streifen 20 nämlich nach dem Aufhängen auf die Trageinrichtung 28 in Längsrichtung wendelförmig. Dies trägt zusätzlich zur optimalen Benetzung derartiger Streifen 20 mit der zu behandelnden Flüssigkeit bei.

Die Fig. 6 zeigt die ideale Relativlage mehrerer Streifen 20 zueinander, wenn diese eine Anordnung der Fig. 2 bzw. 4 aufweisen, also aus drei Lagen 22, 23 bzw. 35, 36 nebeneinanderliegender Streifen 20 gebildet sind, wobei die mittlere Lage 23 bzw. 36 gegenüber den äußeren Lagen 22 bzw. 35 versetzt ist. Dabei wird deutlich, daß infolge der schlangenförmig verlaufenden Ränder 39 der Streifen 20 gleichmäßige Zwischenräume 41 zwischen denselben entstehen. Dadurch wird ein bereichsweises flächiges Zusammenkleben nebeneinander liegender Streifen 20 und eine damit zusammenhängende Herabsetzung der Wirksamkeit des Füllmaterials vermieden. Berührungen können - wenn überhaupt -nur noch punktförmig erfolgen, weil die Ränder 39 der Streifen 20 nur etwa in Richtung zur Flächennormalen mit benachbarten Streifen 20 in Berührung geraten können.

Alternativ zu der in den Fig. 5 bis 7 dargestellten Ausbildung der Streifen 20 lassen sich diese auch aus netzförmigen Kunststoffstreifen bzw. Kunststoffschläuchen herstellen.

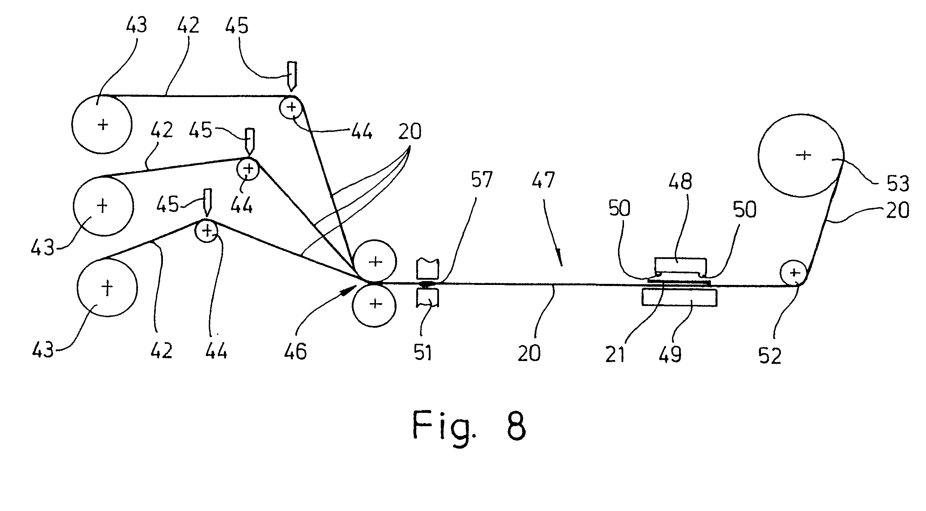

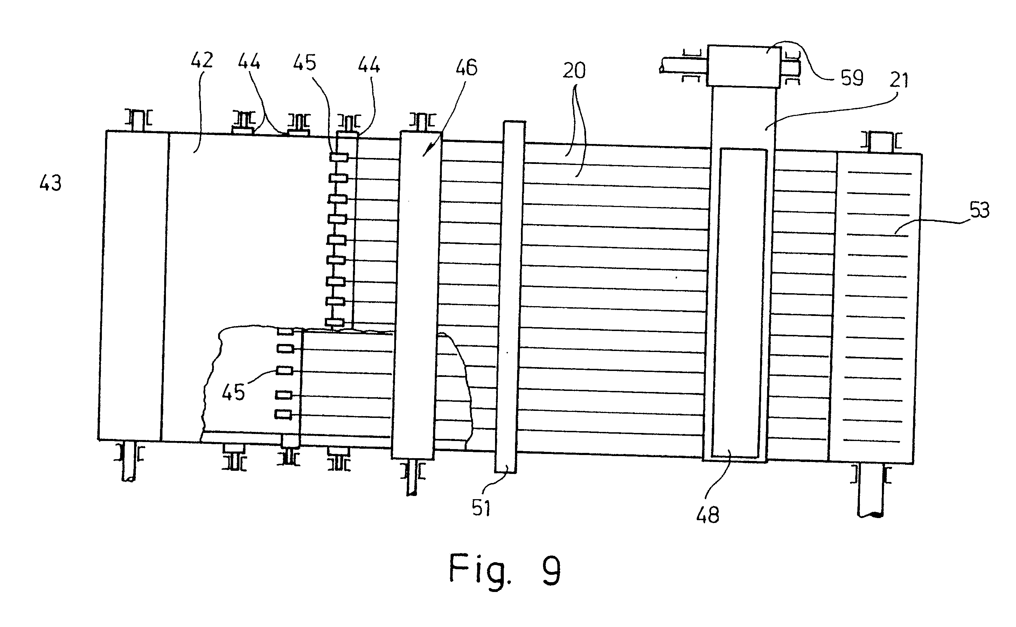

Eine Vorrichtung zur Herstellung des in den Fig. 1 und 2 dargestellten ersten Ausführungsbeispiels des erfindungsgemäßen Füllmaterials ist schematisch in Fig. 8 und 9 dargestellt. Demnach wird jede Lage 22 und 23 der herzustellenden Streifen 20 aus einer entsprechenden Materialbahn 42 gebildet, die von einer Materialrolle 43 kontinuierlich abgezogen wird. Hierzu verfügt die Vorrichtung über drei Materialrollen 43, von denen gleichmäßig drei Materialbahnen 42 abgezogen und zu Umlenktrommeln 44 geleitet werden. Die Umlenkrollen dienen hier als Gegenhalter für eine Mehrzahl mit gleichem Abstand nebeneinander angeordneter Messer 45. Diese zertrennen die Materialbahnen 42 in Streifen 20 etwa gleicher Breite. Der Fig. 9 kann entnommen werden, daß die Messer 45 zur Bildung der mittleren Lage 23 versetzt zu den Messern 45 der äußeren Lagen 22 angeordnet sind. Durch versetzte Schnitte entstehen so automatisch versetzt, nämlich auf Lücke, zueinander liegende Streifen 20. Durch entsprechende Anordnung und Ausbildung der Messer 45 kann gleichzeitig beim Schneiden ein Anrecken der Ränder 39 erfolgen, so daß hierzu kein weiterer Arbeitsgang erforderlich ist.

Nach dem Zertrennen der Materialbahnen 42 in entsprechende Streifen 20 erfolgt eine Zusammenführung derselben zwischen einem Walzenpaar 46 hindurch. Die Mantelfläche mindestens einer Walze dieses Walzenpaares 46 kann mit einer entsprechenden Profilierung zum Strukturieren der zusammenzuführenden Streifen 20 versehen sein. Es ist aber auch denkbar, vor bzw. nach den Umlenktrommeln 44, also vor bzw. nach dem Zerschneiden der Materialbahnen 42, in die Streifen 20 jede Materialbahn 42 an einer nicht dargestellten Strukturierwalze oder einem Strukturierwalzenpaar entlang bzw. durch letzeres hindurchzuführen.

Nach dem Zusammenführen der Streifen 20 am Walzenpaar 46 folgt eine Endbehandlungszone 47. In dieser erfolgt das Verbinden der Streifen 20 mit der quergerichteten Haltebahn 21. Diese wird - wie der Fig. 9 zu entnehmen ist -ebenfalls endlos von einer quer zu den Materialrollen 43 angeordneten Materialrolle 59 abgezogen. Bei momentanem Stillstand der Streifen 20 und der Haltebahn 21 erfolgt ein Verschweißen derselben durch ein Paar quergerichteter Schweißbacken 48 und 49, die unter Wärmeeinwirkung und momentanem Zusammenpressen eine Verschweißung herbeiführen. Um dabei die beiden parallelen Schweißnähte 24 entstehen zu lassen, verfügt die (obere) Schweißbacke 48 an ihrer Unterseite über zwei parallel verlaufende Rippen 50, die bei beim Verschweißen zwei parallele Kontaktstreifen zur Haltebahn 21 bilden.

Gleichzeitig mit dem Verschweißen der Streifen 20 an der Haltebahn 21 erfolgt durch eine mit Abstand vor den Schweißbacken 48 und 49 (in Arbeitsrichtung der Vorrichtung gesehen) angeordnete Siegeleinrichtung 51 eine Markierung des Übergangs vom einen Füllmaterial zum nachfolgenden Füllmaterial durch die Bildung eines Signierstreifens 57.

Das fertiggestellte Füllmaterial wird nach dem Anschweißen der Haltebahnen 21 über eine Umlenkrolle 52 zu einer Vorratstrommel 53 geleitet, auf der das fertiggestellte Füllmaterial hintereinander hängend Aufnahme findet. Das so nacheinander auf der Vorratstrommel 53 aufgewickelte Füllmaterial läßt sich dann nach und nach bei der Herstellung des Tropfkörpers auf die Tragbalken 27 der Trageinrichtung 28 aufhängen.

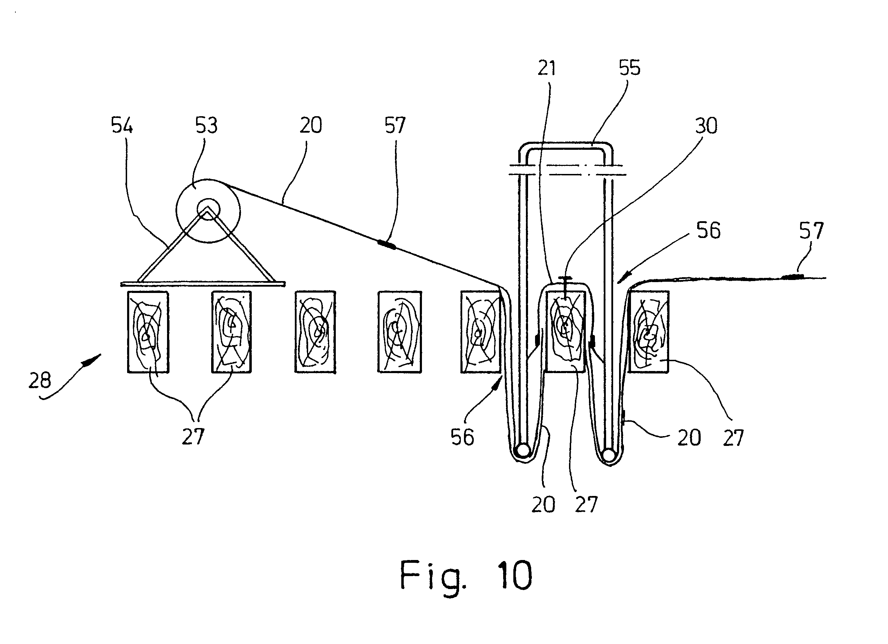

Die Fig. 10 zeigt schematisch die Montage des erfindungsgemäßen Füllmaterials. Dazu wird auf die Trageinrichtung 28 aus in horizontaler Ebene mit Abstand nebeneinanderliegenden Tragbalken 27 ein Abrollrahmen 54 mit der Vorratstrommel 53 aufgestellt. Von der Vorratstrommel 53 wird dann nach und nach das Füllmaterial abgezogen, und zwar immer so weit, bis die Haltebahn 21 bzw. 33 etwa mittig über den mit dem Füllmaterial zu versehenden Tragbalken 27 zu liegen kommt. Durch einen oder mehrere Nägel 30 wird dann die Haltebahn 21 bzw. 33 mit daran befestigten Streifen 20 auf der oberen, horizontalen Fläche des Tragbalkens 27 befestigt. Anschließend werden mit einer U-förmig ausgebildeten Montagegabel 55 die Streifen 20 auf beiden Seiten der Haltebahn 21 bzw. 33 durch die auf beiden Seiten neben dem jeweiligen Tragbalken 27 sich befindenden Zwischenräume hindurchgestoßen, bis die freien Enden der Streifen 20 frei herabhängen.

Vorher sind gegebenenfalls noch die zur Vorratstrommel 53 hin gerichteten freien Enden der Streifen 20 vom nachfolgender Füllmaterial abzutrennen, indem der durch die Siegeleinrichtung 51 hergestellte Signierstreifen 57 zum nachfolgenden Füllmaterial durchtrennt wird, und zwar entweder durch Reißen oder Schneiden.

In gleicher Weise läßt sich das erfindungsgemäße Füllmaterial beider Ausführungsbeispiele auf die weiteren Tragbalken 27 der Trageinrichtung 28 aufhängen zur vollständigen Fertigstellung des Tropfkörpers.

## Patentansprüche

1. Füllmaterial für Tropfkörper zur Behandlung von Flüssigkeiten, insbesondere zur biologischen Abwasserreinigung, mit einer Vielzahl von miteinander verbundenen Streifen (20) aus Kunststoff, die an einer Trageinrichtung aufhängbar sind, **dadurch gekennzeichnet, daß** die Streifen (20) durch eine quer zur Längsrichtung derselben gerichtete folien- oder netzartige Haltebahn (21, 23) miteinander verbunden sind.

2. Füllmaterial nach Anspruch 1, dadurch gekennzeichnet, daß die Streifen (20) nebeneinander liegend mit der Haltebahn (21, 33) verbunden sind, vorzugsweise durch Schweißen.

3. Füllmaterial nach Anspruch 1 oder 2, gekennzeichnet durch wenigstens zwei, insbesondere drei Lagen (22, 23; 35, 36) aus nebeneinanderliegenden Streifen (20).

4. Füllmaterial nach Anspruch 3, dadurch gekennzeichnet, daß jede Lage (22, 23; 35, 36) aus unmittelbar bzw. mit geringem Zwischenraum nebeneinanderliegenden Streifen (20) besteht und eine der Lagen (23; 36) versetzt zu angrenzenden Lagen (22; 35) ist, derart, daß die Streifen (20) angrenzender Lagen (22, 23; 35, 36) auf "Lücke" angeordnet sind.

5. Füllmaterial nach einem oder mehreren der Ansprüche 1 bis 4, dadurch gekennzeichnet, daß die Haltebahn (21, 33) in auf die Trageinrichtung (28) aufgehängtem Zustand einen U-förmigen Verlauf aufweist.

6. Füllmaterial nach Anspruch 1 sowie einem oder mehreren der weiteren Ansprüche, dadurch gekennzeichnet, daß die Haltebahn (21, 33) mit Einschnitten (26) und/oder Durchbrüchen (37) versehen ist, insbesondere als Netz ausgebildet ist.

7. Füllmaterial nach Anspruch 1 sowie einem oder mehreren der weiteren Ansprüche, dadurch gekennzeichnet, daß die Haltebahn (21) quergerichtet etwa mittig zwischen den einander gegenüberliegenden Enden durchgehender Streifen (20) verläuft.

8. Füllmaterial nach Anspruch 7, dadurch gekennzeichnet, daß die Haltebahn (21) durch zwei durchgehend parallel verlaufende Schweißnähte (24) mit den Streifen (20) verbunden ist.

9. Füllmaterial nach Anspruch 8, dadurch gekennzeichnet, daß die Schweißnähte (24) mit Abstand von den Rändern der Haltebahn (21) angeordnet sind zur Bildung von gegenüberliegenden, freien Abtropfenden (29) an der Haltebahn (21).

10. Füllmaterial nach einem oder mehreren der Ansprüche 1 bis 8, dadurch gekennzeichnet, daß zwei Gruppen (31, 32) aus separaten Streifen (20) mit gegenüberliegenden Längsrändern (34) der Haltebahn (33) verbunden sind.

11. Füllmaterial nach Anspruch 10, dadurch gekennzeichnet, daß die Streifen (20) derart an der Haltebahn (33) angeordnet sind, daß diese sich an den einander zugerichteten Innenseiten der vertikalen Schenkel der in montiertem Zustand U-förmig verlaufenden Haltebahn (33) befinden.

12. Füllmaterial nach Anspruch 1 sowie einem oder mehreren der weiteren Ansprüche, dadurch gekennzeichnet, daß die Streifen (20) aus einer Folie, insbesondere einer Polyäthylen- oder Polypropylenfolie, bestehen.

13. Füllmaterial nach Anspruch 12, dadurch gekennzeichnet, daß die Folie der Streifen (20) eine ein- oder zweiseitig strukturierte Oberfläche aufweist.

14. Füllmaterial nach Anspruch 12 oder 13, dadurch gekennzeichnet, daß die Ränder (39) der Streifen (20) angereckt sind zur Bildung wellenförmiger Randbereiche (38).

15. Verfahren zum Herstellen von Füllmaterial zur Abwasserbehandlung nach einem oder mehreren der Ansprüche 1 bis 14, dadurch gekennzeichnet, daß von mindestens einer Materialrolle (43) eine Materialbahn (42) abgezogen, die Materialbahn (42) in Streifen (20) geschnitten, mit einer quergerichteten Haltebahn (21) verschweißt und auf eine Vorratstrommel (53) aufgewickelt wird.

16. Verfahren nach Anspruch 15, dadurch gekennzeichnet, daß die Materialbahn (42) durch eine Mehrzahl vorzugsweise stillstehender Messer (45) im Vorbeibewegen in Abzugsrichtung (Längsrichtung) in nebeneinanderliegende Streifen (20) kontinuierlich zerteilt wird.

17. Verfahren nach Anspruch 16, dadurch gekennzeichnet, daß gleichzeitig mit dem Schneiden der Materialbahn (42) die die Ränder (39) der Streifen (20) bildenden Schnittkanten angereckt werden.

18. Verfahren nach Anspruch 15, dadurch gekennzeichnet, daß nach dem Schneiden der Materialbahn (42) die gebildeten Streifen (20) über wenigstens eine Umlenktrommel mit einem profilierten Mantel geführt wird zum Strukturieren der Streifen (20).

19. Verfahren nach einem oder mehreren der Ansprüche 15 bis 18, dadurch gekennzeichnet, daß nach dem Schneiden und eventuellen Strukturieren quer über die nebeneinanderliegenden Streifen (20) die Haltebahn (21) gezogen und aufgeschweißt wird.

20. Verfahren nach einem oder mehreren der Ansprüche 15 bis 19, dadurch gekennzeichnet, daß während des Aufbringens der Haltebahn (21) die Streifen über die gesamte Breite der Bahn signiert werden zur Bildung eines Signierstreifens (57), durch den das nachfolgende Füllmaterial abgegrenzt wird.

21. Verfahren zum Aufbringen von zur Behandlung von Flüssigkeit dienendem Füllmaterial nach einem oder mehreren der Ansprüche 1 bis 14 auf eine Trageinrichtung aus einer Mehrzahl von mit Abstand untereinander, vorzugsweise in einer horizontalen Ebene angeordneter Tragbalken (27), dadurch gekennzeichnet, daß die hintereinanderliegend auf einer Vorratstrommel (53) angeordneten Füllmaterialien nacheinander abgewickelt werden, wobei das vornliegende Füllmaterial über den zu beschickenden Tragbalken (27) gelegt, mit einer Einfädeleinrichtung (Montagegabel 55) U-förmig um den Tragbalken (27) mit herunterhängenden Enden der Streifen (20) gelegt und anschließend ein Signierstreifen (57) zum nachfolgenden Füllmaterial abgetrennt wird.

22. Verfahren nach Anspruch 21, dadurch gekennzeichnet, daß das Füllmaterial durch eine als eine U-förmige Montagegabel (55) ausgebildete Einfädeleinrichtung auf die Tragbalken (27) aufgehängt wird, wobei die aufrechten Schenkel der Montagegabel (55) einen Abstand voneinander aufweisen, der etwa mittig durch die auf beiden Seiten des zu beschickenden Tragbalkens (27) liegenden Zwischenräume (56) zu angrenzenden Tragbalken (27) hindurchtritt.

23. Verfahren nach Anspruch 21 und 22, dadurch gekennzeichnet, daß die Füllmaterialien auf dem Tragbalken (27) formschlüssig befestigt werden, insbesondere durch wenigstens einen Nagel (30) bzw. eine oder mehrere Klammern.

**Claims**

1. Filling material for percolating filters for the treatment of liquids, especially for biological sewage purification, with a plurality of plastic strips (20) which are connected to one another and which can be suspended on a supporting arrangement, characterised in that the strips (20) are connected to one another by means of a film-like or net-like holding sheet (21, 33) directed transversely relative to their longitudinal direction.

2. Filling material according to Claim 1, characterised in that the strips (20) are connected to the holding sheet (21, 33), preferably by means of welding, so as to lie next to one another.

3. Filling material according to Claim 1 or 2, characterised by at least two, especially three layers (22, 23; 35, 36) of strips (20) lying next to one another.

4. Filling material according to Claim 3, characterised in that each layer (22, 23; 35, 36) consists of strips (20) lying next to one another directly or with a small interspace, and one of the layers (23; 36) is offset relative to adjacent layers (22, 35), in such a way that the strips (20) of adjacent layers (22, 23; 35, 36) are arranged "staggered".

5. Filling material according to one or more of Claims 1 to 4, characterised in that the holding sheet (21, 33) is U-shaped in the state suspended on the supporting arrangement (28).

6. Filling material according to Claim 1 and one or more of the further claims, characterised in that the holding sheet (21, 33) is provided with incisions (26) and/or perforations (37), in particular is designed as a net.

7. Filling material according to Claim 1 and one or more of the further claims, characterised in that the holding sheet (21), directed transversely, extends approximately centrally between the opposing ends of continuous strips (20).

8. Filling material according to Claim 7, characterised in that the holding sheet (21) is connected to the strips (20) by means of two continuous and parallel welding seams (24).

9. Filling material according to Claim 8, characterised in that the welding seams (24) are arranged at a distance from the edges of the holding sheet (21), to form opposing free trickling ends (29) on the holding sheet (21).

10. Filling material according to one or more of Claims 1 to 8, characterised in that two groups (31, 32) of separate strips (20) are connected to opposing longitudinal edges (34) of the holding sheet (33).

11. Filling material according to Claim 10, characterised in that the strips (20) are arranged on the holding sheet (33) in such a way that they are located on the mutually confronting inner faces of the vertical legs of the holding sheet (33) which is U-shaped in the assembled state.

12. Filling material according to Claim 1 and one or more of the further claims, characterised in that the strips (20) consist of a film, especially a polyethylene or polypropylene film.

13. Filling material according to Claim 12, characterised in that the film of the strips (20) has a surface structured on one side or on both sides.

14. Filling material according to Claim 12 or 13, characterised in that the edges (39) of the strips (20) are stretched to form corrugated edge regions (38).

15. Process for producing filling material for sewage treatment according to one or more of Claims 1 to 14, characterised in that a web of material (42) is drawn off from at least one material reel (43), and the web of material (42) is cut into strips (20), welded to a transversely directed holding sheet (21) and wound onto a stock drum (53).

16. Process according to Claim 15, characterised in that the web of material (42) is continuously divided into strips (20) lying next to one another by means of a plurality of preferably stationary knives (45) during its movement past these in the drawing off direction (longitudinal direction).

17. Process according to Claim 16, characterised in that, at the same time as the web of material (42) is cut, the cut edges forming the edges (39) of the strips (20) are stretched.

18. Process according to Claim 15, characterised in that, after the cutting of the web of material (42), the strips (20) formed are guided over at least one deflecting drum with a profiled casing, for the structuring of the strips (20).

19. Process according to one or more of Claims 15 to 18, characterised in that, after the cutting and possible structuring, the holding sheet (21) is drawn transversely over the strips (20) lying next to one another and is welded to them.

20. Process according to one or more of Claims 15 to 19, characterised in that, during the attachment of the holding sheet (21), the strips are marked over the entire width of the sheet, to form a marking strip (57) by which the subsequent filling material is delimited.

21. Process for attaching filling material to be used for the treatment of liquid according to one or more of Claims 1 to 14 to a supporting arrangement consisting of a plurality of supporting beams (27) arranged at a distance from one another, preferably in a horizontal plane, characterised in that the filling materials arranged successively on a stock drum (53) are unwound in succession, the leading filling material being laid over the supporting beam (27) to be covered and being wrapped in a U-shaped manner round the supporting beam (27) by means of a threading-in device (assembly fork 55), with the ends of the strips (20) hanging down, and subsequently a marking strip (57) indicating the subsequent filling material being severed.

22. Process according to Claim 21, characterised in that the filling material is suspended on the supporting beams (27) by means of a threading-in device designed as a U-shaped assembly fork (55), the vertical legs of the assembly fork (55) being at a distance from one another which passes approximately centrally through the gaps (56) located on both sides of the supporting beam (27) to be covered to adjacent supporting beams (27).

23. Process according to Claims 21 and 22, characterised in that the filling materials are fastened positively to the supporting beam (27), in particular by means of at least one nail (30) or one or more staples.

## Revendications

1. Matière de remplissage de corps de percolation pour le traitement de liquides, en particulier pour l'épuration biologique d'eaux résiduaires comprenant un grand nombre de rubans (20) en matière synthétique qui sont mutuellement reliés et qui peuvent être suspendus sur un dispositif de support, caractérisée en ce que les rubans (20) sont mutuellement reliés par une bande de retenue (21, 23) en forme de feuille ou de filet qui est orientée transversalement à la direction longitudinale des rubans.

2. Matière de remplissage suivant la revendication 1, caractérisée en ce que les rubans (20) sont reliés à la bande de retenue (21, 33), de préférence par soudage, en étant situés les uns à côtés des autres.

3. Matière de remplissage suivant l'une des revendications 1 et 2, caractérisée par au moins deux, en particulier trois, couches (22, 23; 35, 36) de rubans (20) situés l'un à côté de l'autre.

4. Matière de remplissage suivant la revendication 3, caractérisée en ce que chaque couche (22, 23; 35, 36) est constituée de rubans (20) directement situés les uns à côtés des autres ou à un faible intervalle et en ce qu'une des couches (23; 36) est décalée par rapport aux couches adjacentes (22; 35) de façon que les rubans (20) des couches adjacentes (22, 23; 35, 36) soient agencées devant des "vides".

5. Matière de remplissage suivant une ou plusieurs des revendications 1 à 4, caractérisée en ce que la bande de retenue (21, 33) présente une allure en forme de U à l'état suspendu sur le dispositif de support (28).

6. Matière de remplissage suivant la revendication 1 ainsi que suivant une ou plusieurs autres revendications, caractérisée en ce que la bande de retenue (21, 33) est pourvue d'incisions (26) et/ou d'ouvertures (37), en particulier est réalisée sous la forme d'un filet.

7. Matière de remplissage suivant la revendication 1 ainsi que suivant une ou plusieurs autres revendications, caractérisée en ce que la bande de retenue (21) s'étend transversalement approximativement au centre entre les extrémités mutuellement opposées des rubans traversants (20).

8. Matière de remplissage suivant la revendication 7, caractérisée en ce que la bande de retenue (21) est reliée aux rubans (20) par deux cordons de soudure (24) qui s'étendent parallèlement de part en part.

9. Matière de remplissage suivant la revendication 8, caractérisée en ce que les cordons de soudure (24) sont agencés à distance des bords de la bande de retenue (21) pour former des extrémités d'égouttage (29) libres, opposées, sur la bande de retenue (21).

10. Matière de remplissage suivant une ou plusieurs des revendications 1 à 8, caractérisée en ce que deux groupes (31, 32) de rubans séparés (20) sont reliés aux bords longitudinaux opposés (34) de la bande de retenue (33).

11. Matière de remplissage suivant la revendication 10, caractérisée en ce que les rubans (20) sont agencés sur la bande de retenue (33) de telle façon que ceux-ci se trouvent sur les faces internes tournées l'une vers l'autres des ailes verticales de la bande de retenue (33) qui s'étend en forme de U à l'état monté.

12. Matière de remplissage suivant la revendication 1 ainsi que suivant une ou plusieurs des autres revendications, caractérisée en ce que les rubans (20) sont constitués à partir d'une feuille, en particulier d'une feuille de polyéthylène ou de polypropylène.

13. Matière de remplissage suivant la revendication 12, caractérisée en ce que la feuille des rubans (20) présente une surface structurée sur une face ou sur les deux.

14. Matière de remplissage suivant l'une des revendications 12 et 13, caractérisée en ce que les bords (39) des rubans (20) sont étirés pour la formation de zones marginales ondulées (38).

15. Procédé de fabrication de matière de remplissage destinée au traitement des eaux résiduaires suivant une ou plusieurs des revendications 1 à 14, caractérisé en ce que, à partir d'au moins un rouleau de matière (43), une bande de matière (42) est soutirée, la bande de matière (42) étant découpée en rubans (20), étant soudée à une bande de retenue (21) orientée transversalement et étant enroulée sur un tambour de réserve (53).

16. Procédé suivant la revendication 15, caractérisé en ce que la bande de matière (42) est, par un grand nombre de couteaux (45), de préférence fixes, divisée de manière continue en rubans situés l'un à côté de l'autre (20) au cours de son avancement dans la direction de soutirage (direction longitudinale).

17. Procédé suivant la revendication 16, caractérisé en ce que, simultanément à la découpe de la bande de matière (42), les bords de coupe formant les bords (39) des rubans (20) sont étirés.

18. Procédé suivant la revendication 15, caractérisé en ce que, après la découpe de la bande de matière (42), les rubans formés (20) sont guidés par-dessus au moins un tambour de renvoi ayant une enveloppe profilée en vue de la structuration des rubans (20).

19. Procédé suivant une ou plusieurs des revendications 15 à 18, caractérisé en ce que, après le découpage et l'éventuelle structuration, la bande de retenue (21) est tirée et soudée transversalement par-dessus les rubans situés l'un à côté de l'autre (20).

20. Procédé suivant une ou plusieurs des revendications 15 à 19, caractérisé en ce que, pendant l'application de la bande de retenue (21), les rubans sont marqués sur toute la largeur de la bande pour la formation d'une bande de marquage (57) par laquelle la matière de remplissage suivante est délimitée.

21. Procédé d'application d'une matière de remplissage servant au traitement de liquide selon une ou plusieurs des revendications 1 à 14 sur un dispositif de support constitué d'un grand nombre de poutres de support (27) agencées à distance entre elles, de préférence dans un plan horizontal, caractérisé en ce que les matières de remplissage agencées l'une derrière l'autre sur un tambour de réserve (53) sont déroulées successivement, la matière de remplissage avant étant posée sur la poutre de support (27) à garnir et étant placée en forme de U autour de la poutre de support (27) avec les extrémités des rubans (20) pendant vers le bas à l'aide d'un dispositif d'enfilage (étrier de montage 55), et en ce qu'ensuite une bande de marquage (57) par rapport à la matière de remplissage suivante est séparée.

22. Procédé suivant la revendication 21, caractérisé en ce que la matière de remplissage est suspendue sur la poutre du support (27) par un dispositif d'enfilage réalisé sous la forme d'un étrier de montage en forme de U (55), les ailes verticales de l'étrier de montage (55) présentant une certaine distance l'un par rapport à l'autre en passant approximativement centralement à travers les intervalles (56) prévus de part et d'autre de la poutre de support à garnir (27) par rapport aux poutres de support adjacentes (27).

23. Procédé suivant l'une des revendications 21 et 22, caractérisé en ce que les matières de remplissage sont fixées par une liaison due à la forme sur la poutre de support (27), en particulier par au moins un clou (30) ou respectivement une ou plusieurs agrafes.

Fig. 1

Fig. 3

Fig. 2

EP 0 274 633 B1

Fig. 4

Fig. 5

Fig. 6

Fig. 7

Fig. 8

Fig. 9

Fig. 10

EP 0 274 633 B1